# EUROPEAN PATENT SPECIFICATION

(11) **EP 1 211 155 B1**
(45) Date of publication and mention of the grant of the patent: **01.03.2006**
(21) Application number: 00311792.6
(22) Date of filing: 29.12.2000
(51) Int. Cl.: B62D 1/184

(54) **Position setting device for vehicle steering columns**
Positionseinstellvorrichtung für Fahrzeuglenksäulen
Dispositif de positionnement pour colonnes de direction de véhicule

(30) Priority: 01.12.2000 KR 2000072269
(43) Date of publication of application: 05.06.2002
(73) Proprietor: Mando Corporation, Pyungtaek-city, Kyunggi-do (KR)
(72) Inventor: Kim, Dong-geun, Wonju-si, Kangwon-do (KR); Shin, Woo-seop, Wonju-si, Kangwon-do (KR)
(74) Representative: Collingwood, Anthony Robert

(56) References cited:
- US-A- 5 351 572
- US-A- 5 820 163

## Description

The present invention relates to a position setting device for vehicle steering columns.

Generally, a steering column for vehide is installed within a cab so as to transmit rotatory force which is generated from a steering handle, to a steering wheel. Common practice is to provide the steering column with a telescopic device for controlling the axial extent of the column and a tilt device for controlling the direction of slant, thereby controlling the position of a steering handle according to the driver's requirements.

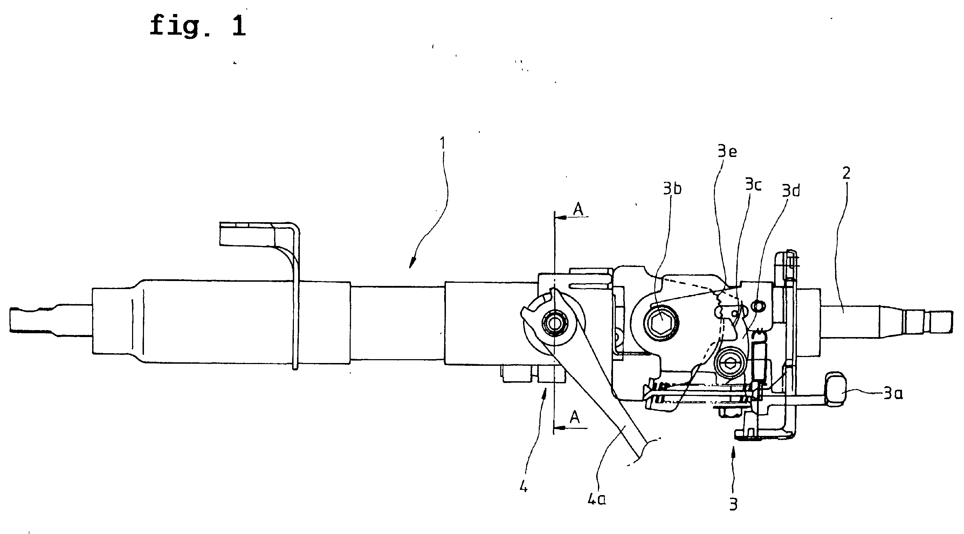

Figure 1 is a side view of a conventional position setting device for a vehide steering column. As illustrated, a steering column (1) is capable of longitudinal extension and contraction contracted due to the provision of a divided hollow shaft, including a steering shaft portion (2) at the upper end of the column which is provided with a universal joint (not illustrated) so as to allow articulation to vary the tilt of the steering column (1).

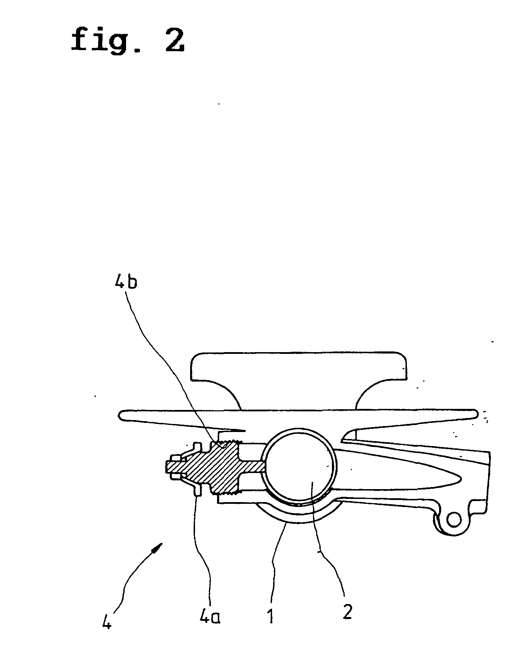

Tilting is controlled by means of a tilt device (3) provided at one side of the steering column (1) so that the steering column can be fixed at a selected angle of articulation/tilt. This tilt device (3) is installed so as to pivot on a hinge (3b). Pulling of a tilt lever (3a) leads a cam face (3c) which is installed at the same shaft as hinge (3b), to release a rotatable member (3d) so that a set of normally-engaged teeth (3e) disengage. As a result, tilting of the upper steering shaft portion (2) is then possible. When the driver releases the tilt lever (3a), the teeth remesh at the selected angle of tilt thereby fixing the steering column at that angle. Figure 2 is a cross-sectional view showing the telescopic action. As illustrated, a securing device (4) is provided at one side of the steering column (1). When a locking lever (4a) installed at the exterior of a steering column (1) is turned, a screw (4b) connected thereto, is rotated. By operating the locking lever so as to withdraw the screw (4b) from engagement with the shaft (2), the steering column (1) may be moved axially relative to the shaft (2) thereby allowing the column to be moved towards or away from the seated driver. To fix the column axially at a desired setting, the locking lever (4) is operated to re-engage the screw (4b) with the shaft (2).

US Patent No. 5,820,163 discloses a tilting and telescoping steering column in which the telescoping and tilt locks are controlled by two separate levers. US Patent No. 5,351,572 discloses an adjusting drive for axially adjusting a steering column.

An objective of the present invention is to provide a position setting device which is more convenient to use as well as being less complicated to manufacture and install.

According to the present invention there is provided a vehicle steering column provided with mechanisms for adjustment of the column both axially and angularly, the column including a pair of telescopically related tubes; and characterised in that the mechanisms are controlled by a single control lever which is mounted for pivotal movement, and the axial adjustment mechanism comprising a lower block which is movable radially with respect to the steering column between a locking position, in which it couples the tubes together to prevent relative axial movement therebetween, and a releasing position in which the tubes are decoupled from each other to permit relative axial movement therebetween, and a taper block which engages the lower block through an inclined surface, whereby axial movement of the taper block is translated into radial movement of the lower block.

The invention will now be described by way of example only with reference to the accompanying drawings, in which:
Figure 1 is a side view showing a conventional steering column for vehicle;
Figure 2 is a cross-sectional view of the line A-A of Figure 1;
Figure 3 is a plan view showing one embodiment of a steering column position setting device according to the present invention;
Figure 4 is a side cross-sectional view of the device of Figure 3; and
Figure 5 is fragmentary enlarged perspective view of a taper block arrangement as seen in Figure 4.

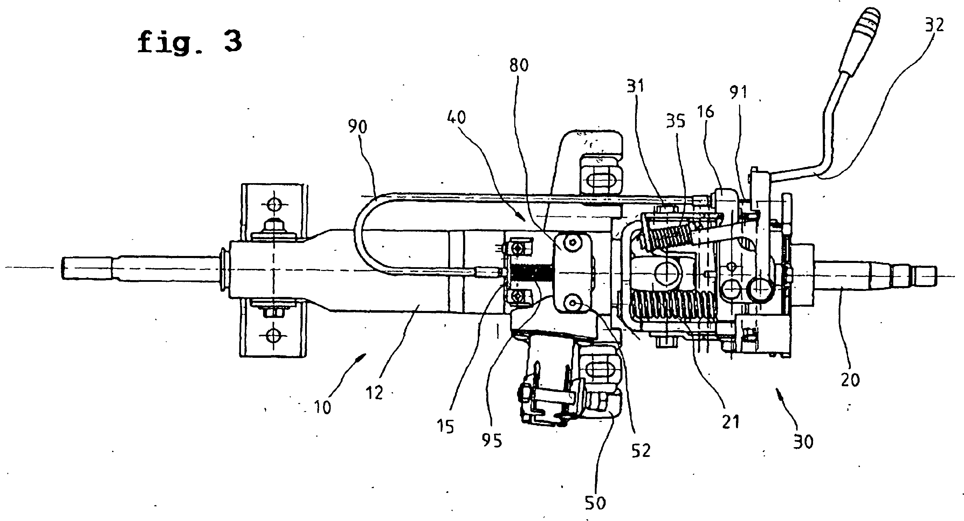

Referring now to Figures 3 to 5, a steering column (10) is designed to be lengthened or shortened by virtue of a telescopic arrangement comprising telescopically related tubes (11, 12) which can be released or locked against relative telescoping movement by means of a securing device (40).

Within the steering column (10), there is a steering shaft assembly (20) including a universal joint (21), the arrangement being such that the steering shaft assembly can be lengthened and shortened by virtue of the telescopic arrangement of the tubes (11, 12) and such that upper portion of the shaft (20), at the right hand side of Figure 3, can be tilted relative to the lower part of the the steering column (10), the angle of tilting allowed by the universal joint (21) being controllable by a tilt-controlling device (30).

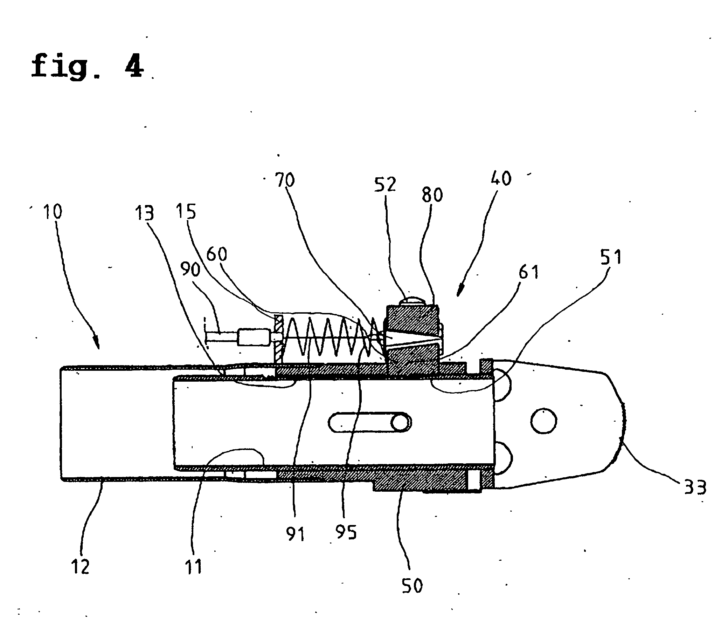

The tilt-controlling device (30) is pivotally mounted on a hinge (31) which extends transversely of the steering column (10). In addition, inboard of the hinge (31), a cam face (not illustrated) connected to the inside of the hinge (31) and a rotation member which is turned by the cam face, are provided. A tooth form portion (33) - see Figure 4 - is provided on the one side of the rotation member. This rotation member and the tooth form portion (33) are connected to the cam face, thereby being engageable and disengageable way of a position control lever (32) extending to the exterior for access by the driver. The arrangement is such that operation of the lever (32) allows tilting of the upper shaft portion of the shaft (20) and release of the lever (32) locks the tilt mechanism in a selected tilted position. A restoring spring (35) connected to a mounting bracket (50) allows the position control lever (32) to be returned to its original position, after it has been operated and then released.

In addition, a securing device (40) in the external upper portion of the steering column (10) is arranged for movement together with the tilt device (30) when the tilt device is operated by the rotation of the position control lever (32).

As illustrated in figure 4, the device (40) is installed in a manner that can be engaged and disengaged with the internal tube (11). That is to say, in a locking condition of the device (40), the tubes (11, 12) are locked together to prevent relative telescoping thereof and hence axial contraction or extension of the steering column. In a releasing condition of the device (40), the tubes (11, 12) are free to telescope with respect to one another thereby allowing the steering column to be extended or contracted by the user.

To this end, a quadrangular through-aperture (51) is provided in a mounting element (50) which is coupled to the outer tube (12). The inner tube (11) is provided with a tooth form (13) for co-operation with a tooth form (61) provided on the radially inner end of a block (60) forming part of the device (40), the arrangement being such that the block (60) is movable radially inwardly and outwardly between an inner locking position in which the tooth forms (13, 60) are meshed, thereby preventing relative telescopic motion between the tube (11) and the mounting element (50) and hence between the tubes (11, 12), and an outer releasing position in which tooth forms (13, 61) are disengaged from to allow such telescopic action. The tooth form (61) may be of convexoconcave form.

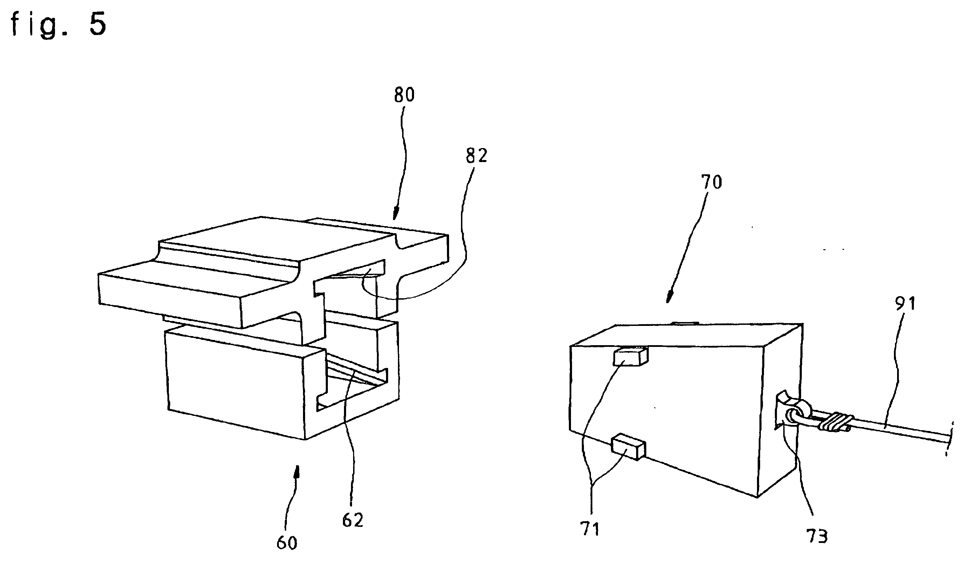

The block (60) forms part of a pair of blocks (60, 80), the upper block (80) being fixedly connected to the mounting element (50) by connectors (52). The blocks (60, 80) are channel shaped and are provided respectively with pairs of grooves (62, 82) in the side walls thereof (see Figure 5). The blocks (60, 80) receive a taper block (70) which is provided with upper and lower sets of protrusions (71) for reception in the grooves (62, 82) respectively of the blocks (60, 80) which are inclined so as to converge towards so that when the taper block (70) moves in one direction, the block (60) is drawn upwardly (or radially outwardly) towards the block (80) and, when moved in the opposite direction, the block (60) is displaced downwardly (radially inwardly) relative to the fixed block (80). In this manner, the block (60) can be moved between its locking and releasing positions as described above.

Such movement of the taper block (70) is effected by means of the position control lever (32) through the agency of a Bowden cable (90). This cable (90) comprises an internal wire (91) which couples the lever (32) to the taper block (70), the outer sheath of the Bowden cable being arranged to extend between fixtures (16) and (15) associated respectively with the upper portion of shaft (20) and the main portion of the steering column (10). As will be seen from Figure 3, the Bowden cable 90 has a U-shaped configuration.

It will be understood that operation of the lever (32) has a dual function. On the one hand, it allows tilting of the steering column assembly and in particular tilting of the upper portion of shaft (20) relative to the lower part of the steering column. At the same time, it disengages the tooth forms (13, 61) to allow axial extension and contraction of the upper portion of the shaft (20).

A spring (95) is provided for biasing the taper block (70) to the position shown in Figure 4 so as to restore the taper block (70) to that position after release of the position control lever (32) following actuation thereof. The supporting spring (95) acts between the taper block (70) and fixture portion (15) and encircles the wire (91) as illustrated in Figure 4. In this way, the spring (95) ensures that, except when the lever (32) is rotated to disengage the tooth forms (13, 61) and also allow tilting, the block (60) is driven into its radially inner position in which the tooth form (61) meshes with the tooth form (13).

In summary, the position setting device of vehicle steering column as described the above, maintains the position of a controlled steering column (10) since, when the position control lever (32) is not operated, the tooth form portion of the tilt device (30) engages with the rotation member and the tooth form (61) of the lower block (60) engages with the tooth form (13) of the internal tube (11).

When operated, pulling of the position control lever (32) allows the tooth form portion (33) and the rotation member of the tilt device (30) to be separated, and therefore, to control the angle of the steering column (10). At the same time, the wire (91) is pulled by the position control lever (32) and the wire (91) moves the taper block (70) in the appropriate direction. Subsequently, the spacing between the upper block (80) and the lower block (60) is reduced as the guide protrusions (71) move along along guide grooves (62, 82). Eventually, the lower block (60) is moved upward.or radially outwardly to disengage the tooth forms (13, 61). When the tilt and telescopic of the steering column (10) have been adjusted, retum of position control lever (32) is effected by the restoring spring (35). After which, the tooth form portion (33) engages with the rotation member in the tilt device (30) and the lower block (60) and the internal pipe (11) are meshed with each other.

As described in detail thus far, a position setting device of a vehicle steering column has the advantage both the telescopic action and the titling action of the steering column may be controlled with the aid of a single control lever and, as a consequence, it is easy to manufacture, install and manipulate the steering column.

## Claims

1. A vehicle steering column (10) provided with mechanisms (30, 40) for adjustment of the column (10) both axially and angularly, the column (10) including a pair of telescopically related tubes (11, 12); and **characterised in that** the mechanisms (30, 40) are controlled by a single control lever (32) which is mounted for pivotal movement , and the axial adjustment mechanism (40) comprising a lower block (60) which is movable radially with respect to the steering column (10) between a locking position, in which it couples the tubes (11, 12) together to prevent relative axial movement therebetween, and a releasing position in which the tubes (11, 12) are decoupled from each other to permit relative axial movement therebetween, and a taper block (70) which engages the lower block (60) through an inclined surface (62), whereby axial movement of the taper block (70) is translated into radial movement of the lower block (60).

2. A steering column as claimed in Claim 1, wherein the taper block (70) is coupled to the lower block (60) through at least one inclined guide groove (62) and at least one guide protrusion (71) which is received within the guide groove (62).

3. A steering column as claimed in Claim 1 or Claim 2, wherein the taper block (70) is coupled to the control lever (32) by a wire which moves the taper block (70) in response to movement of the control lever (32).

4. A steering column as claimed in Claim 3, wherein two guide grooves (62) are provided and two guide protrusions (71) are provided, one guide protrusion being received within each guide groove (62), and the guide protrusions (71) being symmetrical with respect to each other.

5. A steering column as claimed in any of the preceding claims, wherein the lower block (60) includes a tooth form (61), which is engaged with a tooth form (13) provided at a peripheral face of the internal tube (11).

6. A steering column as claimed in Claim 5, wherein the tooth form (61) is of a convexo-concave configuration.

## Patentansprüche

1. Fahrzeug-Lenksäule (10), die mit Mechanismen (30, 40) für die sowohl axiale als auch winkelmäßige Einstellung der Säule (10) versehen ist, welche Säule (10) ein Paar von teleskopisch in Beziehung stehenden Rohren (11, 12) enthält, **dadurch gekennzeichnet, dass** die Mechanismen (30, 40) durch einen einzelnen Steuerhebel (32) gesteuert werden, der für eine Schwenkbewegung gelagert ist, und der axiale Einstellmechanismus (40) einen unteren Block (60), der radial mit Bezug auf die Lenksäule (10) zwischen einer Verriegelungsposition, in der er die Rohe (11, 12) miteinander koppelt, um eine relative axiale Bewegung zwischen diesen zu verhindern, und einer Freigabeposition, in der die Rohre (11, 12) voneinander entkoppelt sind, um eine relative axiale Bewegung zwischen diesen zuzulassen, bewegbar ist, sowie einen konischen Block (70), der mit dem unteren Block (60) über eine geneigte Oberfläche (62) in Eingriff tritt, aufweist, wodurch eine axiale Bewegung des konischen Blocks (70) in eine radiale Bewegung des unteren Blocks (60) umgesetzt wird.

2. Lenksäule nach Anspruch 1, bei der der konische Block (70) mit dem unteren Block (60) durch zumindest eine geneigte Führungsnut (62) und zumindest einen Führungsvorsprung (71), der in der Führungsnut (62) aufgenommen ist, gekoppelt ist.

3. Lenksäule nach Anspruch 1 oder Anspruch 2, bei der der konische Block (70) mit dem Steuerhebel (32) durch einen Draht gekoppelt ist, der den konischen Block (70) als Antwort auf eine Bewegung des Steuerhebels (32) bewegt.

4. Lenksäule nach Anspruch 3, bei der zwei Führungsnuten (62) und zwei Führungsvorsprünge (71) vorgesehen sind, wobei ein Führungsvorsprung innerhalb jeder Führungsnut (62) aufgenommen ist und die Führungsvorsprünge (71) zueinander symmetrisch sind.

5. Lenksäule nach einem der vorhergehenden Ansprüche, bei der der untere Block (60) eine Zahnform (61) enthält, die in Eingriff mit einer Zahnform (13) ist, die an einer Umfangsfläche des inneren Rohres (11) vorgesehen ist.

6. Lenksäule nach Anspruch 5, bei der die Zahnform (61) eine konvex-konkave Konfiguration hat.

## Revendications

1. Colonne de direction de véhicule (10) pourvue de mécanismes (30, 40) pour le réglage de la colonne (10) à la fois axialement et angulairement, la colonne (10) comprenant une paire de tubes associés de manière télescopique (11, 12); et **caractérisée en ce que** les mécanismes (30, 40) sont commandés par un unique levier de commande (32) qui est monté pour un mouvement pivotant, et le mécanisme de réglage axial (40) comporte un bloc inférieur (60) qui est mobile radialement par rapport à la colonne de direction (10) entre une position de blocage, dans laquelle il relie les tubes (11, 12) afin d'empêcher un mouvement axial relatif entre eux, et une position de libération dans laquelle les tubes (11, 12) sont découplés l'un de l'autre afin de permettre un mouvement axial relatif entre eux, et un bloc conique (70) qui engage le bloc inférieur (60) par l'intermédiaire d'une surface inclinée (62), de sorte qu'un mouvement axial du bloc conique (70) est transformé en un mouvement radial du bloc inférieur (60) .

2. Colonne de direction selon la revendication 1, dans laquelle le bloc conique (70) est relié au bloc inférieur (60) par l'intermédiaire d'au moins une rainure de guidage inclinée (62) et au moins une saillie de guidage (71) qui est reçue dans la rainure de guidage (62).

3. Colonne de direction selon la revendication 1 ou la revendication 2, dans laquelle le bloc conique (70) est relié au levier de commande (32) par un câble qui déplace le bloc conique (70) en réponse à un mouvement du levier de commande (32).

4. Colonne de direction selon la revendication 3, dans laquelle deux rainures de guidage (62) sont prévues et deux saillies de guidage (71) sont prévues, une saillie de guidage étant reçue dans chaque rainure de guidage (62), et les saillies de guidage (71) étant symétriques l'une par rapport à l'autre.

5. Colonne de direction selon l'une quelconque des revendications précédentes, dans laquelle le bloc inférieur (60) comprend une forme de dent (61), qui est engagée avec une forme de dent (13) prévue au niveau d'une face périphérique du tube interne (11).

6. Colonne de direction selon la revendication 5, dans laquelle la forme de dent (61) est d'une configuration convexe-concave.
